# EUROPEAN PATENT SPECIFICATION

(11) **EP 2 124 403 B1**
(45) Date of publication and mention of the grant of the patent: **28.09.2011**
(21) Application number: 09169973.6
(22) Date of filing: 21.06.2007
(51) Int. Cl.: H04L 12/58, H04W 88/18

(54) **Attachment server network for viewing attachments on a portable electronic device**
Anhangsserver-Netz zur Anzeige von Anhängen auf einer tragbaren elektronischen Vorrichtung
Réseau de serveur de pièce jointe pour afficher les pièces jointes sur un dispositif électronique portable

(43) Date of publication of application: 25.11.2009
(62) Divisional of application: 07110755.1
(73) Proprietor: RESEARCH IN MOTION LIMITED, Waterloo, Ontario N2L 3W8 (CA)
(72) Inventor: Martin, Daryl Joseph, Waterloo Ontario A1L 2Y6 (CA); Hassan, Ahmed E., Kingston Ontario K7L 3N6 (CA); O'Rourke, Connor Patrick, Kanata Ontario K2K 1L4 (CA)
(74) Representative: MERH-IP Matias Erny Reichl Hoffmann

(56) References cited:
- EP-A- 1 708 098
- US-A1- 2002 065 892
- US-A1- 2003 028 647
- US-A1- 2006 133 340

## Description

The present disclosure relates generally to a method for viewing an attachment on a portable electronic device, in particular, a method for viewing an attachment using an attachment server network.

It is becoming increasingly popular to send photographs, scanned documents, slide shows, PDF documents and other types of attachments in email messages. Each attachment is provided with a filename and is linked to an email message in a manner that is well known in the art. Often, a single email message may contain multiple attachments as well as multiple recipients.

EP 1708 098 A suggests a process for previewing a table attachment on a mobile communication device, and upon identifying table content of interest, retrieving a converted version of the table content of interest from an attachment server. Portions of the table information may be cached locally at the attachment server.

US 2006/133340 A1 shows a technique for downloading a converted version of an attachment to an email message received by a mobile communication device. Conversion may be carried out in compliance with parameters like attachment document format and display size of the mobile communication device.

US 2003/028647 A1 and US 2002/065892 A1 show further examples of message delivery systems for e-mail communication.

Attachments that are received by portable electronic devices are typically converted into a device-readable format at a server before being sent to the device for display. The length of the conversion process varies depending on the size and complexity of the attachment as well as the load on the server. It is therefore desirable to reduce the processing time in order to minimize the delay experienced by the device user when opening an attachment.

### GENERAL

In one aspect there may be provided a method for enabling an attachment of an email message to be viewed on a portable electronic device, said method comprising: receiving a view request for the attachment of an e-mall message from a portable electronic device at a server; in response to reception of the view request, retrieving the attachment from a mail server and forwarding the attachment to a selected one of a plurality of attachment servers in an attachment server network, said selecting by said server being based on attachment server load; performing a search on said one of said attachment servers in said attachment server network to locate a converted attachment corresponding to said attachment of said email message, said converted attachment being in a portable electronic device readable format;

in the event the search on said one of said attachment servers is unsuccessful in locating said converted attachment then performing a search on other ones of said plurality of attachment servers to locate said converted attachment; and upon locating said converted attachment, sending said converted attachment to said portable electronic device for display by an attachment viewer of the portable electronic device, or in the event the searches on said one and said other ones of said plurality of attachment servers are unsuccessful in locating said converted attachment then converting the attachment in said selected one of said plurality of attachment servers, storing said converted attachment locally and sending said converted attachment to said portable electronic device for display by said attachment viewer.

In another aspect there may be provided an attachment server which is able to carry out the steps of the method described before.

In another aspect there may be provided an attachment server network comprising at least two attachment servers, which are able to carry out the steps of the method described before, in communication with one another.

### BRIEF DESCRIPTION OF THE DRAWINGS

The embodiments will be better understood with reference to the following Figures in which like numerals denote like parts and in which:
- Figure 1: is a schematic diagram of a wireless communication system;
- Figure 2: is a schematic diagram showing communication between servers of the wireless communication system of Figure 1;
- Figure 3: is a block diagram of components of a portable electronic device according to an embodiment;
- Figure 4: is a flowchart depicting a method of viewing an attachment of an email message;
- Figures 5 and 6: are schematic diagrams showing communication between servers of the wireless communication system of Figure 1; and
- Figure 7: is a schematic diagram showing an exemplary embodiment of the method of Figure 4.

### DESCRIPTION OF PREFERRED EMBODIMENTS

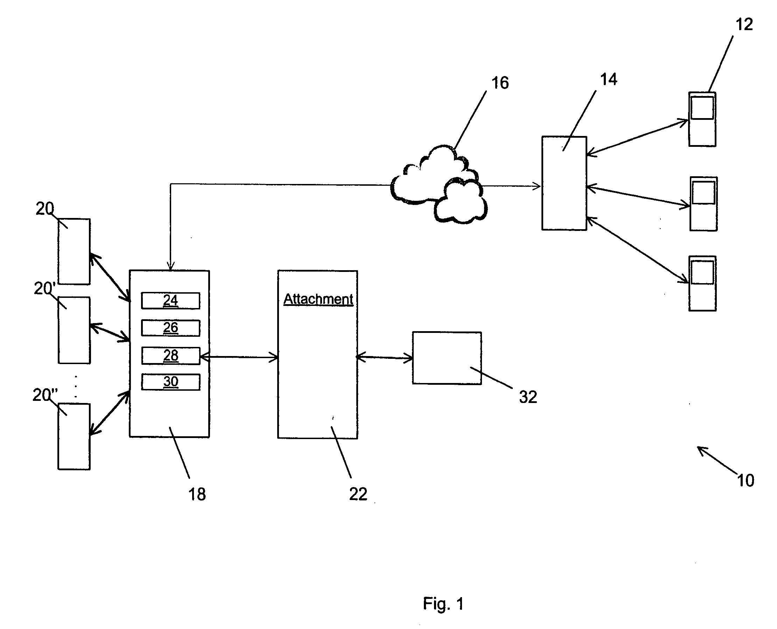

Referring now to Figure 1, a communication system 10 for a portable electronic device 12 is generally shown. The portable electronic device 12 is operable to effect communications over a radio communications channel and communicates with a base station (not shown) while located within a coverage area that is defined by the base station. The base station is part of a wireless network that is in communication with the Internet 16. Data is delivered to the portable electronic device 12 via wireless transmission from the base station. Similarly, data is sent from the portable electronic device 12 via wireless transmission to the base station.

It will be appreciated that the portable electronic device 12 is movable within the coverage area and can be moved to coverage areas defined by other base stations. A relay 14 is provided to route data, such as email messages, for example, between the Internet 16 and the current base station of the portable electronic device 12. Further, as will be understood by one of ordinary skill in the art, wireless networks include GSM/GPRS, CDPD, TDMA, iDEN, Mobitex, DataTAC networks, EDGE, EVDO or UMTS and broadband networks such as Bluetooth and variants of 802.11.

A server 18 handles wireless client requests from the portable electronic device 12. A firewall or a proxy server (not shown) is provided between the server 18 and the Internet 16. The server 18 includes a router 24, a dispatcher 26, an agent 28 and an attachment server process 30.

A mail server 22 communicates with the server 18 to exchange emails with an email client 32 such as Microsoft Outlook™. The agent 28 sends compressed copies of emails received at the mail server 22 to the portable electronic device 12 via the dispatcher 26, the router 24 and the relay 14. Typically multiple email clients 32 communicate with the mail server 22. Emails originating from the email clients are stored at the mail server 22 before being compressed at server 18 and sent out over the internet. Similarly, emails received from the internet are transmitted to the email clients 32 via the server 18 and the mail server 22.

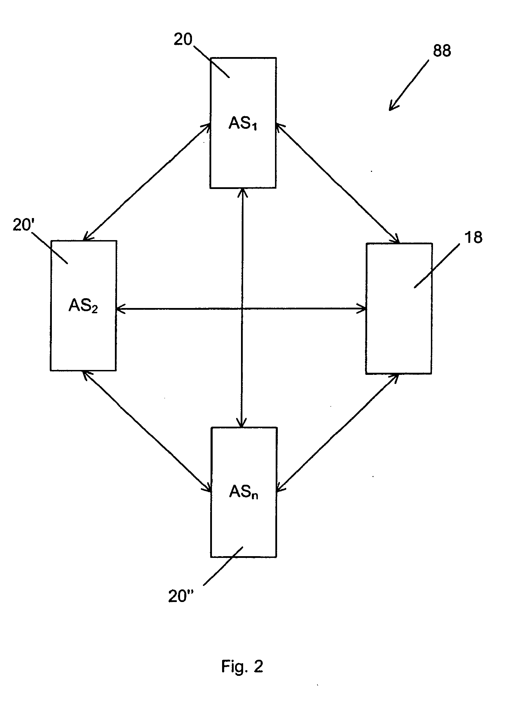

The server 18 uses attachment server process 30 to process attachment data from the mail server 22 (e.g. documents, spreadsheets, presentations, etc.). Additional attachment server processes 20, 20' and 20" may reside on additional servers in communication with the attachment server process 30 and with one another to create an attachment server network 88, which is shown in Figure 2. It will be appreciated that any number of attachment server processes (hereinafter referred to as attachment servers) may be provided, the number is selected based on the number of portable electronic device users communicating with the server 18.

It will be appreciated by a person skilled in the art that although server 18 is described as including an attachment server, it may alternatively be limited to non-attachment server functions but in communication with one or more attachment servers for processing attachment data.

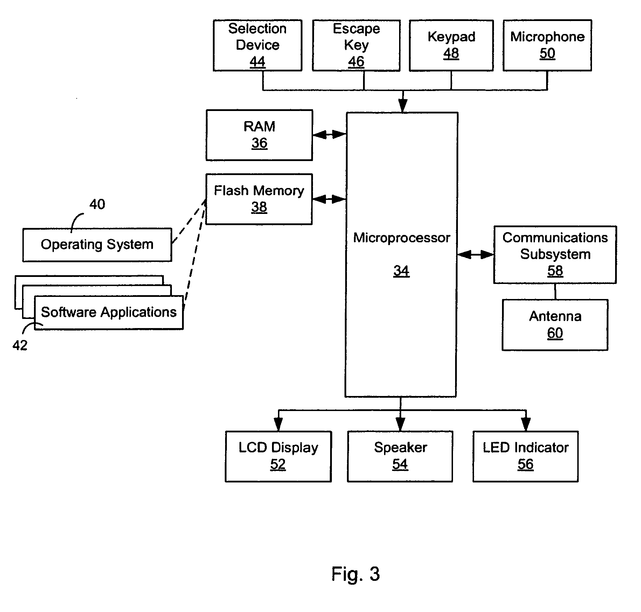

Referring now to Figure 3, a block diagram of certain components, including internal components within the portable electronic device 12, is shown. The portable electronic device 12 is based on a microcomputer that includes a microprocessor 34 connected to a random access memory (RAM) unit 36 and a persistent storage device, which in the present embodiment is a flash memory 38 that is responsible for various non-volatile storage functions of the portable electronic device 12. Operating system software 40 executable by the microprocessor 34 is stored in the flash memory 38. It will be appreciated, however, that the operating system software 40 can be stored in other types of memory such as read-only memory (ROM). In the present embodiment, software applications 42 including Personal Information Manager (PIM) applications are stored in the persistent storage device 38 for execution by the microprocessor 34 for carrying out various functions. The microprocessor 34 receives input from various input devices including a selection device 44 such as a thumbwheel or trackball, for example, an escape key 46, a keypad 48 and a microphone 50 and outputs to various output devices including an LCD display 52, a speaker 54 and an LED indicator 56.

As indicated above, the flash memory 38 stores a plurality of applications executable by the microprocessor 34 that enable the portable electronic device 12 to perform certain operations including the communication operations referred to above. Applications software is provided including, for example, PIM applications such as an email application, an address book application, a calendar application, a tasks application and an attachment viewer application, as well as other applications such as a Web browser application, an options application and a profiles application.

In a data communication mode, a received signal such as a text message or Web page download is processed by the communications subsystem 58 and input to the microprocessor 34 for further processing of the received signal for output to the LCD display 52. A user of the portable electronic device 12 can also compose data items within a software application such as an e-mail messaging application using the keypad 48, for example, in conjunction with the selection device 44 and the LCD display 52. Such composed items can then be transmitted over the communications network through the communications subsystem 58 and antenna 60.

Request/view functionality for an attachment of an email message received by the portable electronic device 12 is provided by the attachment viewer application and the attachment servers. The attachment viewer application, which is executed by the microprocessor 34 of the portable electronic device 12, communicates with the attachment servers 30, 20, 20', 20" to display transcoded/ compressed attachment data that corresponds to email attachments. The attachment data may be a document converted to plain text, an audio file compressed to mp3 or an image with reduced quality, for example.

In the present embodiment, the portable electronic device 12 is based on the computing environment and functionality of a wireless personal digital assistant (PDA). It will be understood, however, that the portable electronic device 12 is not limited to wireless personal digital assistants. Other portable electronic devices are possible, such as smart telephones, and laptop computers.

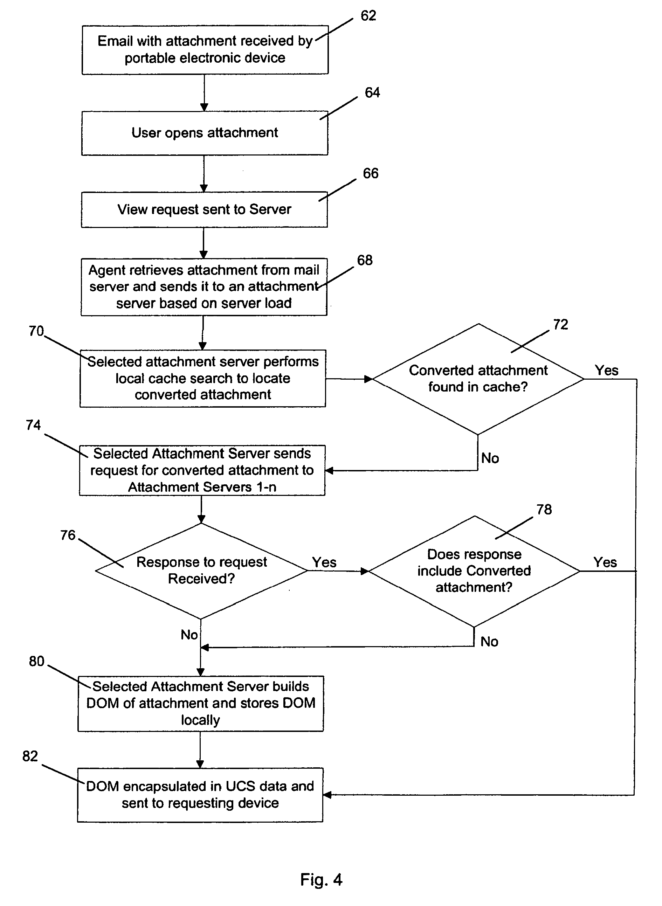

Referring to Figure 4, a method for viewing an attachment on the portable electronic device 12 is generally shown. At steps 62 and 64, an email including an attachment is received by the portable electronic device 12 and the attachment is selected and opened by a user. A view request is then sent from the portable electronic device 12 to the server 18, as indicated at step 66. The view request may originate at the attachment viewer, a home screen of the device 12 or a window of the email application. The view request typically includes a screen size (height/width) of the portable electronic device 12, a color depth, such as 8 bit, 16 bit or 32 bit, for example, a version tag indicating device attachment viewer capabilities such as what file types the attachment viewer is able to receive and display, for example, and the maximum chunk size of data.

At step 68, the agent 28 receives the view request, preferably retrieves the attachment from the mail server 22 and forwards the attachment to one of the attachment servers 30, 20, 20', 20" in the attachment server network 88. The agent 28 determines which attachment server 30, 20, 20', 20" to send the attachment to based on server load. Alternatively, the attachment server 30, 20, 20',20", etc., may fetch attachment data from a local or remote mail store.

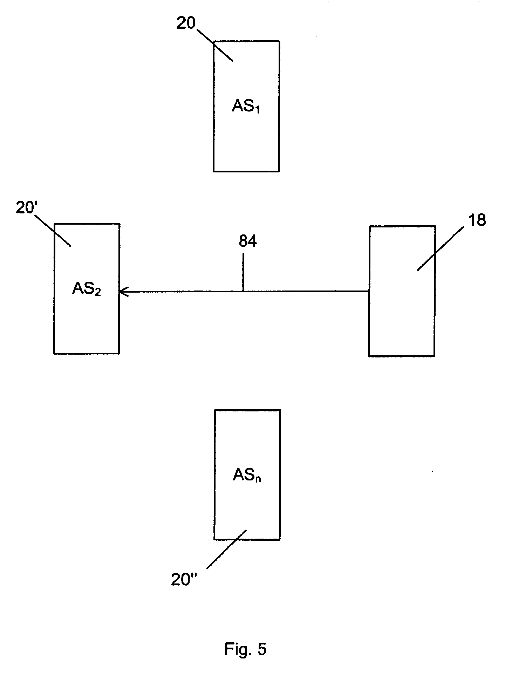

In this exemplary embodiment, the view request is routed to the attachment server 20', as indicated by arrow 84 in Figure 5. Once the attachment server 20' selected, the attachment server 20' performs a search of its local cache in order to locate a converted attachment corresponding to the email attachment, as indicated at steps 70 and 72. The search is performed using a checksum or other information for identifying the attachment, such as creation date, modification date, md 5 sums, attributes, etc. A filename of the attachment may also be provided, although it is not necessary that the filename be identical to that of the attachment in the local cache. If a converted attachment is found in the local cache, the DOM (Document Object Model) of the converted attachment is encapsulated in attachment viewer-readable UCS (Universal Content Stream) data and sent to the attachment viewer, as indicated at step 82. Details of DOM creation and encapsulation of attachment data in UCS is known in the art and described, for example, in United States Patent Publication No. US2002/0161796.

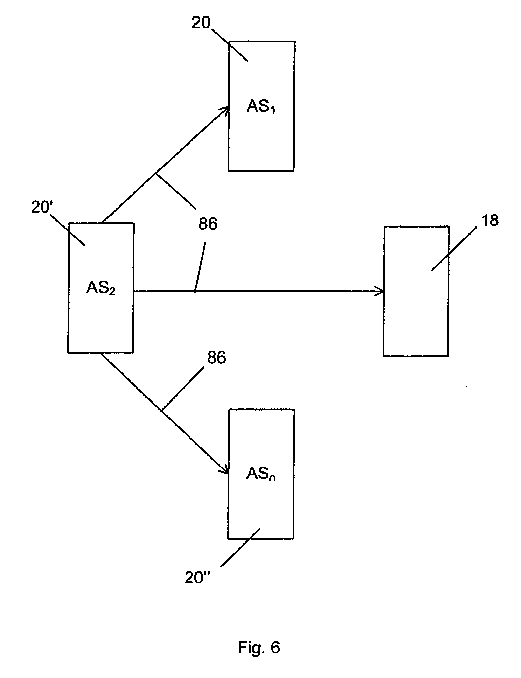

At step 74, following an unsuccessful local cache search, the selected attachment server 20' sends a search request directly to the other attachment servers 30, 20, 20", as indicated by arrows 86 in Figure 6. The search request is sent in order to determine if the attachment has been previously converted at a different attachment server 30, 20, 20". The search request includes a checksum or other information for identifying the attachment, and may also include a filename of the attachment.

The attachment server 20' then waits for a response to the search request from the other attachment servers 30, 20, 20", as indicated at step 76. If a response is received, the attachment server 20' determines if the received response includes a DOM'(Document Object Model) corresponding to a converted attachment, at step 78. If so, the DOM is encapsulated in UCS data and sent to the attachment viewer, as indicated at step 82. If no response to the search request is received, or If the response does not include a DOM corresponding to the converted attachment, the attachment server builds a DOM of the attachment and stores the DOM locally, as indicated at step 80. Once the DOM has been created, the DOM is encapsulated in attachment viewer-readable UCS data and sent to the attachment viewer, as indicated at step 82.

DOM structure is well known and is disclosed in United States Patent Application Nos. 2002/0161796 and 2006/0055693. In general, an Attachment Server 18 builds a DOM by parsing the attachment document to generate a graph structure representing a map of the original attachment file. The DOM contains textual content, font, style and formatting attributes as well as layout attributes, such as page/slide size, positioning information (ie. x, y and z coordinates on the page), embedded graphics and tables, for example.

According to an alternative embodiment, the attachment server that receives the request from agent 28 as a result of step 68 (e.g. attachment server 20') transmits a unique ID to the mobile device 12 following execution of step 72. If the converted attachment is found in the cache of attachment server 20' (a "YES" at step 72), the unique ID is used to associate future requests from the device 12 with attachment server 20'. If the converted attachment is not found in the cache of attachment server 20' (a "NO" at step 72), the attachment server 20' may attach a unique ID of another attachment server (e.g. server 20, 20", etc.) for ensuring that the next request from device 12 goes to the other attachment server. According to this embodiment, the unique ID causes the attachment server in the original request to "point" the device 12 to the attachment server whose cache is likely to contain the converted attachment. This minimizes scanning across the network of attachment servers and also decreases the latency time at the device 12, from the perspective of the user.

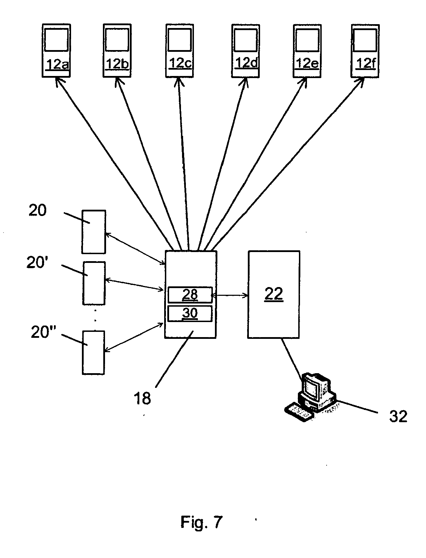

The method for viewing an attachment on portable electronic device 12 will now be described with reference to the example of Figure 7. In this example, an email is generated at an email client 32. The email includes a document from the Human Resources Department that is sent to every employee in a company regarding a change to the benefits package. Once sent, the email travels to the mail server 22 and is distributed to each email address. For employees having portable electronic devices, the agent 28 locates the emails on the mail server 22 and sends the emails to the corresponding portable electronic devices.

Upon receiving the email including the attachment at portable electronic device 12a, the user opens the attachment and a view request is sent to the agent 28. In response to the view request, the agent retrieves the attachment from the mail server 22 and sends it to the attachment server having the most processing availability of all of the servers in the attachment server network. Since the other attachment servers are determined to have a higher processing load at the time the request is received, the attachment is sent to attachment server 20. Since portable electronic device 12a is the first of the portable electronic devices to request to view the attachment, a local search and a search of the other attachment servers to locate a corresponding converted attachment are both unsuccessful. The attachment server 20 then builds a DOM of the attachment and stores the DOM locally. The DOM is then encapsulated in UCS data and sent to the portable electronic device 12a. The user of device 12a is then able to view the attachment.

Later, the user of portable electronic device 12c opens the email including the attachment and a view request is sent to the agent 28. Again the agent 28 retrieves the email from the mail server 22 or other mail store and sends the attachment to the server having the most processing availability, such as attachment server 30. Once attachment server 30 receives the attachment, a local search is performed in order to locate the corresponding converted attachment. Since the attachment was previously converted on attachment server 20, the search is unsuccessful. Search requests are then forwarded to the other attachment servers in the attachment server network 88. Unsuccessful responses are received from attachment servers 20' and 20". The response from attachment server 20 is successful and includes the DOM of the converted attachment. The DOM is then encapsulated in UCS data and sent to the portable electronic device 12c and the user of device 12c is able to view the attachment.

A similar process will occur for the subsequent view requests for the same attachment from other portable electronic devices 12b, 12d, 12e, 12f so that the conversion and transcoding process is only performed once. Since the conversion process consumes significant CPU power to process the meta-data and render images, reducing the process to a single instance therefore reduces processing time, reduces the delay experienced by users waiting to view an attachment and allows more users to be added to a single server 18.

It will be appreciated by a person skilled in the art that if the device types of the portable electronic devices is not the same, the conversion process would have to be performed once per device type.

In another embodiment, each attachment server in the attachment server network 88 broadcasts or otherwise sends notifications to each other attachment server in response to changes in cache information. The caches of the servers in the network are therefore continuously updated so that each attachment server will have a generally identical cache. In such an embodiment only a local search for converted attachments is performed following a view request. If no corresponding converted attachment is found locally, the attachment will be converted and the DOM sent to the other servers in the attachment server network 88. Then, if a different attachment server receives a subsequent view request for the previously converted attachment, the DOM will be retrieved from the local cache of that attachment server. Parameters, such as a maximum cache size and from which servers cache updates are received, for example, would be configurable.

In another embodiment, all of the attachment servers in the network 88 update a central cache accessible to all servers.

In yet another embodiment, the attachment servers of the attachment server network 88 are periodically synchronized with one another. In this embodiment, rather than sending search requests across the attachment server network 88 or sending notifications including new cache information, the attachment servers in the network 88 are synchronized at regular intervals to copy cache information to one another. The length of the intervals would be determined based on server load such that, for example, if the server load is high then cache updates may be delayed until such time as the server load permits.

It will be appreciated by a person skilled in the art that the view request, the search request and any other communication between the attachment servers 18, 20, 20' and 20" may be performed using TCP (Transmission Control Protocol) or UDP (User Datagram Protocol).

Although the converted attachment has been described herein as being a DOM, it will be appreciated by a person skilled in the art that any over the air optimization may be used. For example, an optimization that sends only a small chunk of transcoded text instead of a full document or an optimization that sends a well compressed image.

Specific embodiments have been shown and described herein. However, modifications and variations may occur to those skilled in the art. All such modifications and variations are believed to be within the sphere and scope of the present invention as defined in the appended claims.

In the following different aspects of the present document are listed:
Aspect 1. A method for enabling an attachment of an email message to be viewed on a portable electronic device, said method comprising:
   receiving a view request from a portable electronic device at one of a plurality of attachment servers in an attachment server network;
   performing a search on successive ones of said attachment servers in said attachment server network to locate a converted attachment corresponding to said attachment of said email message; and
   upon locating said converted attachment, sending said converted attachment to said portable electronic device for display by said attachment viewer.
Aspect 2. A method according to aspect 1, wherein said search is performed locally on said one attachment server prior to performing said search on other attachment servers in said attachment server network.
Aspect 3. A method according to aspect 1 or aspect 2, wherein said search is performed remotely on other attachment servers of said attachment server network in response to a search request being sent from said one attachment server, said request identifying said attachment of said email message.
Aspect 4. A method according to aspect 3, wherein said search is performed remotely following an unsuccessful local search on said one attachment server.
Aspect 5. A method according to any preceding aspect, wherein said converted attachment data is encapsulated in a device-readable format prior to being sent to said portable electronic device.
Aspect 6. A method according to any preceding aspect, wherein said attachment is identified in said search by a checksum.
Aspect 7. A method according to any preceding aspect, wherein said one attachment server transmits a unique ID to said portable electronic device identifying a predetermined one of said plurality of attachment servers to receive further view requests from said portable electronic device.
Aspect 8. A method according to aspect 7, wherein said unique ID identifies said one attachment server.
Aspect 9. A method according to aspect 7, wherein said unique ID identifies another of said plurality of attachment servers.
Aspect 10. A method according to any preceding aspect including the step of converting the attachment at said one server if no converted attachment corresponding to said attachment of said email message is found as a result of said search.
Aspect 11. An attachment server network comprising at least two attachment servers in communication with one another, each of said attachment servers for converting email attachments in response to view requests received from portable electronic devices, each of said attachment servers having access to a cache for storing data corresponding to previously converted attachments, said data being available to any of said attachment servers in said attachment server network.
Aspect 12. An attachment server network according to aspect 11, wherein data stored in a first cache of a first attachment server is available to a second attachment server in response to a search request being sent from said second attachment server to said first attachment server.
Aspect 13. An attachment server network according to aspect 12, wherein said search request comprises a checksum to identify said attachment. Aspect 14. An attachment server network according to aspect 13, comprising a respective cache in each attachment server in said attachment server network respective caches being synchronized at regular intervals to provide generally identical data on said respective cache of each attachment server in said attachment server network.
Aspect 15. An attachment server network according to aspect 14, wherein responsive to generation of new cache data in one attachment server, said cache data is sent to other attachment servers of said attachment server network for storage in a respective cache of each of said other attachment servers.
Aspect 16. An attachment server network according to aspect 11, wherein said cache is a central data store accessible to each of said attachment servers.
Aspect 17. A method for enabling an attachment of an email message to be viewed on a portable electronic device, said method comprising:
   receiving a view request from a portable electronic device at one of a plurality of attachment servers in an attachment server network;
   performing a search on said one attachment server to locate a converted attachment corresponding to said attachment of said email message; and if no converted attachment is found corresponding to said attachment of said email message, sending a request for said converted attachment to one or more other servers in said network.
Aspect 18. A method according to aspect 17 including receiving a response to said request from the one or more other servers in the network and if a response includes the converted attachment, forwarding the converted attachment to the portable electronic device.
Aspect 19. A method according to aspect 17 or 18 including receiving a response to said request from the one or more other servers in the network and if no response includes the converted attachment, converting the attachment at said one attachment server and sending the attachment to the portable electronic device.
Aspect 20. A method according to aspect 17, 18 or 19 wherein said one attachment server transmits a unique ID to said portable electronic device identifying the server at which the converted document was stored for use in further view requests from said portable electronic device.
Aspect 21. A method according to any of aspects 17 to 20 comprising the step of storing at said one attachment server data relating to previously converted attachments.
Aspect 22. A method according to aspect 21 comprising receiving and storing data relating to previously converted attachments from one or more other attachment servers in the network.
Aspect 23. An attachment server configured to carry out the method of any of aspects 17 to 22.
Aspect 24. A computer readable medium embodying program code executable by a processor in an attachment server for implementing the method of any of aspects 17 to 22.

## Claims

1. A method for enabling an attachment of an email message to be viewed on a portable electronic device (12), said method comprising:
receiving a view request for the attachment of an e-mail message from a portable electronic device (12) at a server; **characterised in that**
in response to reception of the view request, retrieving the attachment from a mail server (18) and forwarding the attachment to a selected one of a plurality of attachment servers in an attachment server network, said selecting by said server being based on attachment server load;
performing a search on said one of said attachment servers In said attachment server network to locate a converted attachment corresponding to said attachment of said email message, said converted attachment being in a portable electronic device readable format;
in the event the search on said one of said attachment servers is unsuccessful in locating said converted attachment then performing a search on other ones of said plurality of attachment servers to locate said converted attachment; and
upon locating said converted attachment, sending said converted attachment to said portable electronic device (12) for display by an attachment viewer of the portable electronic device (12), or in the event the searches on said one and said other ones of said plurality of attachment servers are unsuccessful in locating said converted attachment then converting the attachment In said selected one of said plurality of attachment servers, storing said converted attachment locally and sending said converted attachment to said portable electronic device (12) for display by said attachment viewer.

2. A method as claimed in claim 1, wherein said search is performed locally on said one attachment server prior to performing said search on other attachment servers in said attachment server network.

3. A method as claimed in claim 1 or 2, wherein said search is performed remotely on other attachment servers of said attachment server network in response to a search request being sent from said one attachment server, said request identifying said attachment of said email message.

4. A method as claimed in claim 3, wherein said search is performed remotely following an unsuccessful local search on said one attachment server.

5. A method as claimed in any preceding claim, wherein said converted attachments is encapsulated in a device-readable format prior to being sent to said portable electronic device (12).

6. A method as claimed in any preceding claim, wherein said attachment is identified In said search by a checksum.

7. A method as claimed in any preceding claim, wherein said one attachment server transmits a unique ID to said portable electronic device (12) identifying a predetermined one of said plurality of attachment servers to receive further view requests from said portable electronic device (12).

8. A method as claimed in claim 7, wherein said unique ID identifies said one attachment server.

9. A method as claimed in claim 7, wherein said unique ID identifies another of said plurality of attachment servers.

10. An attachment server configured to carry out all the steps of the method according to any one of claims 1 to 9.

11. An attachment server network including at least two attachment servers according to claim 10 In communication with one another.

12. An attachment server network as claimed in claim 11, wherein data stored in a first cache of a first attachment server is available to a second attachment server in response to a search request being sent from said second attachment server to said first attachment server.

13. An attachment server network as claimed in claim 12, wherein said search request includes a checksum to identify said attachment.

14. An attachment server network as claimed in claim 11, wherein said cache comprises a respective cache in each attachment server in said attachment server network, said respective caches being synchronized at regular intervals to provide generally identical data on said respective caches of each attachment server in said attachment server network.

## Patentansprüche

1. Verfahren zum Ermöglichen eines Betrachtens eines Anhangs einer Email-Nachricht auf einer tragbaren elektronischen Vorrichtung (12), wobei das Verfahren aufweist:
Empfangen einer Betrachten-Anforderung für den Anhang einer Email-Nachricht von einer tragbaren elektronischen Vorrichtung (12) an einem Server;
**gekennzeichnet durch**
in Reaktion auf einen Empfang der Betrachten-Anforderung, Abrufen des Anhangs von einem Mail-Server (18) und Weiterleiten des Anhangs an einen ausgewählten aus einer Vielzahl von Anhangs-Servern in einem Anhangs-Server-Netzwerk" wobei das Auswählen **durch** den Server auf einer Anhangs-Server-Last basiert;
Durchführen einer Suche auf dem einen der Anhangs-Server in dem Anhangs-Server-Netzwerk, um einen umgewandelten Anhang zu lokalisieren,
der dem Anhang der Email-Nachricht entspricht, wobei der umgewandelte Anhang in einem **durch** die tragbare elektronische Vorrichtung lesbaren Format ist;
in dem Fall, dass die Suche auf dem einen der Anhangs-Server bei einer Lokalisieren des umgewandelten Anhangs nicht erfolgreich ist, dann Durchführen einer Suche auf anderen der Vielzahl von Anhangs-servern, um den umgewandelten Anhang zu lokalisierten; und
bei einem Lokalisieren des umgewandelten Anhangs, Senden des umgewandelten Anhangs an die tragbare elektronische Vorrichtung (12) zum Anzeigen **durch** einen Anhang-Betrachter der tragbaren elektronischen Vorrichtung (12), oder in dem Fall, dass die Suchen auf dem einen und den anderen der Vielzahl von Anhangs-Seivern bei einem Lokalisieren des umgewandelten Anhangs nicht erfolgreich sind, dann Umwandeln des Anhangs in dem ausgewählten der Vielzahl von Anhangs-Servern, Speichern des umgewandelten Anhangs lokal und Senden des umgewandelten Anhangs an die tragbare elektronische Vorrichtung (12) zur Anzeige **durch** den Anhang-Betrachter.

2. Verfahren gemäß Anspruch 1, wobei die Suche lokal auf dem einen Anhangs-Server durchgeführt wird vor einem Durchführen der Suche auf anderen Anhangs-Servern in dem Anhangs-Server-Netzwerk.

3. Verfahren gemäß Anspruch 1 oder 2, wobei die Suche entfernt auf anderen Anhangs-servern des Anhangs-Server-Netzwerks durchgeführt wird in Reaktion auf eine Suchanforderung, die von dem einen Anhangs-Server gesendet wird, wobei die Anforderung den Anhang der Email-Nachricht identifiziert.

4. Verfahren gemäß Anspruch 3, wobei die Suche entfernt durchgeführt wird nachfolgend auf eine nicht-erfolgreiche lokale Suche auf dem einen Anhangs-Server.

5. Verfahren gemäß einem vorhergehenden Anspruch, wobei der umgewandelte Anhang vor einem Senden an die tragbare elektronische Vorrichtung (12) in ein von der Vorrichtung lesbares Format eingekapselt wird.

6. Verfahren gemäß einem vorhergehenden Anspruch, wobei der Anhang in der Suche durch eine Prüfsumme identifiziert wird.

7. Verfahren gemäß einem vorhergehenden Anspruch, wobei der eine Anhangs-Server eine eindeutige ID an die tragbare elektronische Vorrichtung (12) sendet, die einen vorgegebenen der Vielzahl von Anhangs-Servern identifiziert zum Empfangen weiterer Betrachten-Anforderungen von der tragbaren elektronischen Vorrichtung (12).

8. Verfahren gemäß Anspruch 7, wobei die eindeutige ID den einen Anhangs-Server identifiziert.

9. Verfahren gemäß Anspruch 7, wobei die eindeutige ID einen weiteren der Vielzahl von Anhangs-Servern identifiziert.

10. Anhangs-Server, der konfiguriert ist zum Ausführen aller Schritte des Verfahrens gemäß einem der Ansprüche 1 bis 9.

11. Anhangs-Server-Netzwerk, das zumindest zwei Anhangs-Server gemäß Anspruch 10 in Kommunikation miteinander umfasst.

12. Anhangs-Server-Netzwerk gemäß Anspruch 11, wobei Daten, die in einem ersten Cachespeicher eines ersten Anhangs-Servers gespeichert sind, für einen zweiten Anhangs-server verfügbar sind in Reaktion auf eine Suchanforderung, die von dem zweiten Anhangs-Server an den ersten Anhangs-Server gesendet wird.

13. Anhangs-Server-Netzwerk gemäß Anspruch 12, wobei die Suchanforderung eine Prüfsumme zum Identifizieren des Anhangs umfasst.

14. Anhangs-Server-Netzwerk gemäß Anspruch 11, wobei der Cachespeicher einen jeweiligen Cachespeicher in jedem Anhangs-Server in dem Anhangs-Server-Netzwerk aufweist, wobei die jeweiligen Cachespeicher in regelmäßigen Abständen synchronisiert werden, um im Wesentlichen identische Daten in den jeweiligen Cachespeichern jedes Anhangs-servers in dem Anhangs-Server-Netzwerk vorzusehen.

## Revendications

1. Procédé permettant de visualiser une pièce jointe d'un message de courriel sur un dispositif électronique portatif (12), ledit procédé comprenant l'étape consistant à :
recevoir sur un serveur une demande de visualisation de la pièce jointe message de courriel en provenance d'un dispositif électronique portatif (12)
**caractérise par** les étapes consistant a :
à la suite de la réception de la demande de visualisation, obtenir la pièce jointe auprès d'un serveur de courriel (18) et acheminer la pièce jointe vers un premier serveur sélectionné parmi une pluralité de serveurs de pièces jointes sur un réseau de serveurs de pièces jointes, ladite sélection par ledit serveur étant fondée sur la charge des serveurs de pièces jointes ;
effectuer, sur ledit premier serveur parmi lesdits serveurs de pièces jointes dans ledit réseau de serveurs de pièces jointes, une recherche afin de localiser une pièce jointe convertie qui correspond à ladite pièce jointe dudit message de courriel, ladite pièce jointe convertie étant dans un format lisible par le dispositif électronique portatif ;
si la recherche sur ledit premier serveur parmi lesdits serveurs de pièces jointes échoue à localiser ladite pièce jointe convertie, effectuer une recherche sur d'autres serveurs dans ladite pluralité de serveurs de pièces jointes, afin de localiser ladite pièce jointe convertie ; et
après localisation de ladite pièce jointe coi-ivertie, envoyer ladite pièce jointe convertie vers ledit dispositif électronique portatif (12) afin qu'elle soit affichée par un visualiseur de pièces jointes du dispositif électronique portatif (12), ou bien, si les recherches sur ledit premier serveur et sur lesdits autres serveurs parmi ladite pluralité de serveurs de pièces jointes échouent à localiser ladite pièce jointe convertie, convertir la pièce jointe sur ledit serveur sélectionné parmi ladite pluralité de serveurs de pièces jointes, stocker ladite pièce jointe convertie localement et envoyer ladite pièce jointe convertie vers ledit dispositif électronique portatif (12) afin qu'elle soit affichée par ledit visualiseur de pièces jointes.

2. Procédé selon la revendication 1, dans lequel ladite recherche est effectuée localement sur ledit premier serveur de pièces jointes avant d'effectuer ladite recherche sur d'autres serveurs de pièces jointes sur ledit réseau de serveurs de pièces jointes.

3. Procédé selon la revendication 1 ou 2, dans lequel ladite recherche est effectuée à distance sur d'autres serveurs de pièces jointes dudit réseau de serveurs de pièces jointes, en réponse à l'envoi d'une demande de recherche envoyée par ledit premier serveur de pièces jointes, ladite demande identifiant ladite pièce jointe dudit message de courriel.

4. Procédé selon la revendication 3, dans lequel ladite recherche est effectuée à distance après l'échec d'une recherche locale sur ledit premier serveur de pièces jointes.

5. Procédé selon l'une quelconque des revendications précédentes, dans lequel ladite pièce jointe convertie est encapsulée dans un format lisible par le dispositif savant d'être envoyée audit dispositif électronique portatif (12).

6. Procédé selon l'une quelconque des revendications précédentes, dans lequel ladite pièce jointe est identifiée dans ladite recherche par un total de contrôle.

7. Procédé selon l'une quelconque des revendications précédentes, dans lequel ledit premier serveur de pièces jointes envoie audit dispositif électronique portatif (12) un code d'identification unique qui identifie un serveur prédéterminé parmi ladite pluralité de serveurs de pièces jointes afin qu'il reçoive des demandes supplémentaires de visualisation provenant dudit dispositif électronique portatif (12).

8. Procédé selon la revendication 7, dans lequel ledit code d'identification unique identifie ledit premier serveur de pièces jointes.

9. Procédé selon la revendication 7, dans lequel ledit code d'identification unique identifie un autre serveur dans ladite pluralité de serveurs de pièces jointes.

10. Serveur de pièces jointes configuré pour exécuter toutes les étapes du procédé selon l'une quelconque des revendications 1 à 9.

11. Réseau de serveurs de pièces jointes comprenant au moins deux serveurs de pièces jointes selon la revendication 10, qui communiquent l'un avec l'autre.

12. Réseau de serveurs de pièces jointes selon la revendication 11, dans lequel des données stockées dans une première mémoire-cache d'un premier serveur de pièces jointes sont accessibles à un second serveur de pièces jointes en réponse à une demande de recherche envoyée par ledit second serveur de pièces jointes audit premier serveur de pièces jointes.

13. Réseau de serveurs de pièces jointes selon la revendication 12, dans lequel ladite demande de recherche comprend un total de contrôle destiné à identifier ladite pièce jointe.

14. Réseau de serveurs de pièces jointes selon la revendication 11, dans lequel ladite mémoire-cache comprend une mémoire-cache respective sur chaque serveur de pièces jointes dans le réseau de serveurs de pièces jointes, lesdites mémoires-caches respectives étant synchronisées à intervalles réguliers afin de fournir des données généralement identiques dans lesdites mémoires-caches respective de chaque serveur de pièces jointes sur ledit réseau de serveurs de pièces jointes.
